Europäisches Patentamt

European Patent Office

Office européen des brevets

(19)

(11) EP 0 774 185 B1

(12) EUROPÄISCHE PATENTSCHRIFT

(45) Veröffentlichungstag und Bekanntmachung des Hinweises auf die Patenterteilung:
**19.05.1999 Patentblatt 1999/20**

(21) Anmeldenummer: **95925713.0**

(22) Anmeldetag: **20.07.1995**

(51) Int Cl.⁶: **H04L 12/40**, H04B 3/54

(86) Internationale Anmeldenummer:
**PCT/DE95/00960**

(87) Internationale Veröffentlichungsnummer:
**WO 96/04735 (15.02.1996 Gazette 1996/08)**

(54) **BUSTEILNEHMER**

BUS NODE

STATION RACCORDEE A UN BUS

(84) Benannte Vertragsstaaten:
**AT CH DE FR GB IT LI NL SE**

(30) Priorität: **04.08.1994 DE 9412303 U**

(43) Veröffentlichungstag der Anmeldung:
**21.05.1997 Patentblatt 1997/21**

(73) Patentinhaber: **SIEMENS AKTIENGESELLSCHAFT
80333 München (DE)**

(72) Erfinder:
• **HAMMER, Gerhard
D-76777 Neupotz (DE)**
• **SCHNEIDER, Rudi
D-76872 Minfeld (DE)**

(56) Entgegenhaltungen:
**WO-A-93/08652          DE-A- 4 121 961
DE-A- 4 138 065**

**Beschreibung**

Die Erfindung betrifft einen Busteilnehmer gemäß dem Oberbegriff des Anspruchs 1.

In Feldbussen, welche insbesondere in der Verfahrenstechnik eingesetzt werden, ist es üblich, die Busteilnehmer mit Energie über zwei auch für die Datenübertragung vorgesehene Busleitungen zu versorgen. Dabei ist es erforderlich, daß die Energieübertragung die eigentliche Signalübertragung nicht beeinträchtigt und daß die Verlustleistung die verwendeten Bauelemente nicht zu stark thermisch belastet.

Das Dokument DE-A- 41 21 961 beschreibt eine Busanschaltung, wobei die Informationen als Variation einer Stromgröße übertragen werden. In diesem System erfolgt die Energieversorgung durch eine im Schwingermodus betreibbare Spannungsübertragungseinrichtung. Eine Regelverstärkereinrichtung im Sekundärbereich, die eine Spannungssunterschied zwischen einem Sollwert und einem Istwert ermittelt, wirkt im Verbindung mit einer auf der Primärseite angeordneten Regeleinrichtung so daß die an die Elektronik des Busteilnehmers übertragbare Leistung konstant ist. Die IEC-Norm 1158-2 legt die wichtigsten Eigenschaften von Feldbusanschaltungen von Busteilnehmern fest. Insbesondere ist vorgeschrieben, Daten in Form von Wechselstrom und Energie in Form von Gleichstrom (Gleichspannung) zu übertragen. Dabei ist vorgesehen, daß die Speisegleichspannung maximal 32 V und die Eingangsgleichspannung am Teilnehmer mindestens 9 V beträgt. Weiterhin ist gefordert, daß im Signalfrequenzbereich die Busanschaltung hochohmig ($\geq$ 3 k$\Omega$) ist und daß die Stromaufnahme der Anschaltung sich um höchstens 1 mA/ms ändert. Hinweise, wie diese Eigenschaften zu verwirklichen sind, werden in dieser IEC-Norm nicht angegeben.

Um die vorgegebenen Eigenschaften in Feldbusanschaltungen zu verwirklichen, können die Busteilnehmer als sogenannte "Konstantstromsenken" ausgebildet sein. Dies bedeutet, daß die Busanschaltung eines Teilnehmers einen konstanten, nicht veränderbaren Grundstrom aus den Busleitungen entnimmt, um diesen zur Datenübertragung zu modulieren. Aus diesem Grundstrom erzeugen geeignete Mittel, z. B. ein Speicherkondensator mit einer Zenerdiode, eine Spannung zur Versorgung der Elektronik des Busteilnehmers. Dabei wird die Konstantstromeigenschaft dadurch erreicht, daß man den aufgenommenen Grundstrom z. B. als Spannungsabfall über einen Widerstand mißt und über ein Stellglied, z. B. einen Transistor, einem Sollwert in Form eines konstanten Referenzstromes nachführt. Beim Sendevorgang wird diesem Referenzwert ein sogenannter Modulationsstrom überlagert. Bei entsprechender Dimensionierung der Busanschaltung an der Leitungsschnittstelle weist diese Anschaltung die erforderliche Impedanz auf.

Die Leitungen eines Feldbusses haben gewöhnlich eine Länge zwischen einigen hundert Metern und einigen Kilometern, wodurch aufgrund der Spannungsabfälle an den Leitungen an den Busteilnehmeranschlußstellen des Feldbusses unterschiedliche Gleichspannungen anliegen. An einem von einem Speisegerät des Feldbusses am weitesten entfernten Busteilnehmer liegt eine wesentlich geringere Gleichspannung an, z. B. die vorgeschriebene Mindestspannung von 9 V, als an dem dem Speisegerät am nächsten angeordneten Busteilnehmer. Sind diese beiden Teilnehmer als Konstantstromsenken für eine Versorgungsspannung von z. B. 3 V und einen Energieverbrauch von 30 mW ausgelegt, so bedeutet dies, daß die Verlustleistung in dem Busteilnehmer am höchsten ist, welcher dem Speisegerät am nächsten angeschlossen ist. Diese Verlustleistung kann ein Vielfaches der vom Teilnehmer benötigten Leistung betragen und kann zu thermischen Problemen im Teilnehmer führen. Größe Verlustleistungen können insbesondere in den Busteilnehmern auftreten, welche zum Anschluß an einen eigensicheren Feldbus mit einer Speisespannung von ca. 15 V ausgelegt sind und die bei Bedarf an einen nichteigensicheren Bus mit einer maximalen Speisespannung von 32 V anzuschließen sind. Im übrigen ist die aufgenommene Leistung proportional zur anliegenden Spannung und führt dazu, daß die Anzahl der fernspeisbaren Teilnehmer nicht durch Erhöhung der Speisespannung oder durch Verringerung des Leitungswiderstandes erhöht werden kann. Aus der internationalen Patentanmeldung WO 93/08652 ist ein Kommunikationssystem mit einem Feldbus bekannt, an welchem mehrere Busteilnehmer anschließbar sind. Diese Teilnehmer sind als Konstantstromsenken ausgebildet. Es sind keine Maßnahmen vorgesehen, um die Verlustleistung der Busteilnehmer zu verringern.

Der vorliegenden Erfindung liegt die Aufgabe zugrunde, einen Busteilnehmer der eingangs genannten Art mit einer von der Eingangsspannung nahezu unabhängigen Verlustleistung während des Betriebs in einem Feldbus anzugeben.

Diese Aufgabe wird durch einen Busteilnehmer mit den im Anspruch 1 angegebenen Maßnahmen gelöst.

Die Erfindung geht von der Idee aus, daß der Busteilnehmer nicht als bekannte Konstantstromsenke, sondern als "Konstantleistungssenke" ausgeführt ist. Dadurch, daß die Einrichtungen der Busanschaltung unabhängig von deren Eingangsgleichspannung die Leistungsaufnahme auf einen nahezu konstanten Wert einstellen, ist es möglich, die Anzahl der Busteilnehmer am Feldbus zu erhöhen. In einem praktischen Ausführungsbeispiel der Erfindung sind an einen Feldbus (Widerstandsbelag der Busleitung = 25 m$\Omega$/m, Leistungsbedarf = 33 mW, Speisespannung = 14 V, Betriebsspannung = 3,3 V) bei einer Leitungslänge von 2 km sechzehn Meßumformer mit als Konstantleistungssenken ausgebildeten Anschaltungen anschließbar, bei einer Leitungslänge von 500 m siebenundzwanzig Meßumformer. Sind dagegen die Anschaltungen als Konstantstromsenken ausgebildet, so ist unabhängig von der Leitungslänge ein Betrieb mit lediglich zehn an den Bus angeschlossenen Meßumformern möglich.

Vorteilhafte Ausgestaltungen der Erfindung ergeben sich aus den Unteransprüchen.

Anhand der Zeichnungen, in denen in einem Ausführungsbeispiel der Erfindung ein erster und ein zweiter an einen Feldbus angeschlossener Busteilnehmer veranschaulicht ist, werden die Erfindung sowie deren Ausgestaltungen und Vorteile näher erläutert.

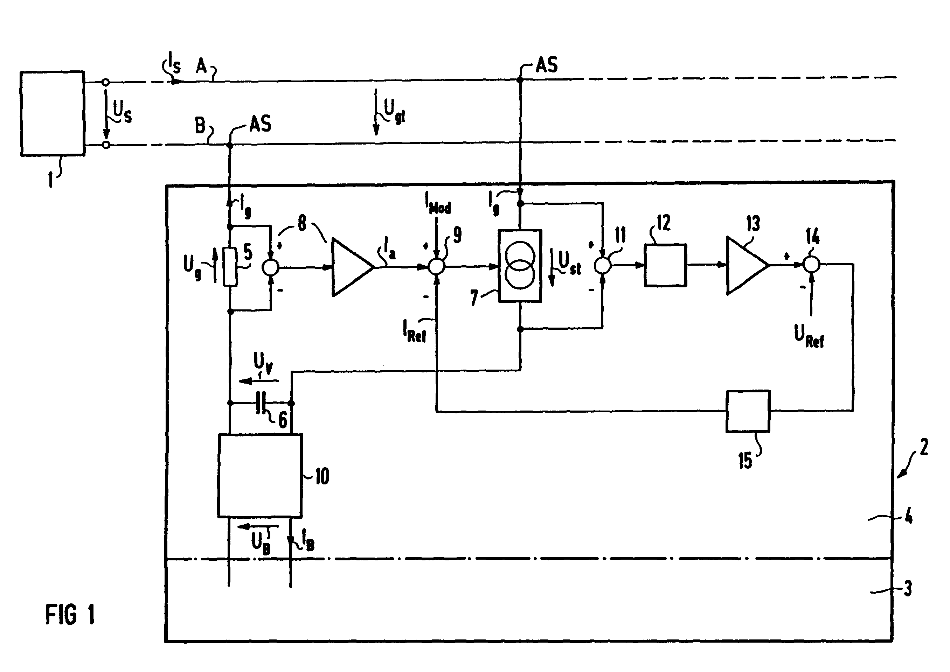

In Figur 1 ist mit 1 ein Speisegerät bezeichnet, das einen aus einem Leiter A, B bestehenden Feldbus mit einer Speisespannung $U_S$ von 32 V und einem Speisestrom $I_S$ von max. 150 mA versorgt. Ein Busteilnehmer 2 besteht im wesentlichen aus einer Anwenderschaltung 3 und aus einer Busanschaltung 4. Die Schaltung 3 kann z. B. ein Temperaturmeßumformer sein, an welchen ein hier nicht dargestelltes Widerstandsthermometer anschließbar ist. Die Anschaltung 4 ist über Anschlußstellen AS an die Busleitungen A, B des Feldbusses angeschlossen, an die selbstverständlich mehrere Teilnehmer angeschlossen sein können. Zur besseren Übersicht ist allerdings nur ein Busteilnehmer dargestellt. Wegen des Spannungsabfalls an den Busleitungen A, B liegt an den Anschlußstellen AS nicht die Speisespannung $U_S$, sondern eine verminderte Eingangsgleichspannung $U_{gl}$ an. Aufgrund dieser Eingangsgleichspannung $U_{gl}$ und der Dimensionierung der Anschaltung 4 fließt ein Gleichstrom $I_g$ in der Anschaltung 4, wodurch an einem Meßwiderstand 5 eine Spannung $U_g$, an einem Speicherkondensator 6 eine Spannung $U_V$ und an einem Stromstellglied 7 eine Spannung $U_{st}$ abfällt. Der Meßwiderstand 5, der Speicherkondensator 6, das Stromstellglied 7 in Form eines Transistors, ein Spannungs/Strom-Konverter 8 sowie eine Vergleichseinrichtung 9 bilden einen ersten Regelkreis einer Regeleinrichtung, welcher - wie im folgenden noch gezeigt wird - mit einem zweiten Regelkreis der Regeleinrichtung in Wirkverbindung steht. Der Spannungsabfall $U_g$ am Meßwiderstand 5 erzeugt am Ausgang des Spannungs/Strom-Konverters 8 einen Strom $I_a$, welchen die Vergleichseinrichtung 9 erfaßt. Die Vergleichseinrichtung 9 erfaßt ebenfalls einen von dem zweiten Regelkreis erzeugten Referenzstrom $I_{Ref}$ sowie einen zur Datenübertragung erforderlichen Modulationsstrom $I_{Mod}$ (von der Schaltung 3) und steuert mit der Gleichstromdifferenz $I_a$ das Stromstellglied 7 an. In Abhängigkeit dieses Steuerstroms $I_a$ stellt sich die Spannung $U_{st}$ am Stromstellglied derart ein, daß der Gleichstrom $I_g$ bei konstanter Eingangsgleichspannung $U_{gl}$ konstant bleibt. Ein geregelter DC/DC-Wandler 10 wandelt die Spannung $U_V$ am Speicherkondensator 6 in eine für den Betrieb der elektronischen Schaltung 3 erforderliche konstante Betriebsspannung $U_B$ um. Entsprechend der Leistungsaufnahme der elektronischen Schaltung 3 und dieser Betriebsspannung $U_B$ fließt in der Schaltung 3 ein konstanter Grundstrom $I_B$, aus welchem die Schaltung 3 unter anderem den Modulationsstrom $I_{Mod}$ zur Datenübertragung erzeugt. Der DC/DC-Wandler 10 überträgt die Leistung von der Anschaltung 4 zur Schaltung 3 gemäß der Gleichung:

$$U_V \cdot I_g \cdot \eta = U_B \cdot I_B,$$

wobei $\eta$ den Wirkungsgrad des DC/DC-Wandlers 10 bedeutet. Ändert sich die Gleichspannung $U_{gl}$ an den Eingängen der Anschaltung 4, z. B. weil der Busteilnehmer 2 an einer anderen Stelle des Busses angeordnet wird, so ändert sich der Eingangsgleichstrom $I_g$ und dadurch die Spannung $U_V$ am Speicherkondensator 6, die Spannung $U_g$ am Meßwiderstand 5 und die Spannung $U_{st}$ am Stromstellglied 7. Um die Leistungsaufnahme des Teilnehmers 2 konstantzuhalten und somit einen Anstieg der Verlustleistung des Teilnehmers 2 bei ansteigender Eingangsspannung $U_{gl}$ zu verhindern, ist es deshalb erforderlich, den Referenzstrom $I_{Ref}$ zu ändern. Dazu weist die Regel.einrichtung einen zweiten Regelkreis auf. Geeignete Mittel 11 dieses Regelkreises erfassen eine Änderung des Spannungsabfalls $U_{st}$ am Stromstellglied 7 und führen diese über ein Tiefpaßfilter 12 und einen Verstärker 13 einer Vergleichseinrichtung 14 zu, welche mit einer voreinstellbaren konstanten Referenzspannung $U_{Ref}$ beaufschlagt ist. Die Referenzspannung $U_{Ref}$ ist eine bekannte, aus dem Datenblatt des Stromstellgliedes 7 ableitbare Größe, bei welcher die Verlustleistung der Anschaltung 4 ein Minimum aufweist. Ein Spannungs/Strom-Konverter 15 erzeugt aus der Regeldifferenz am Ausgang der Vergleichseinrichtung 14 eine entsprechende Änderung des Referenzstromes $I_{Ref}$, wodurch der Spannungsabfall $U_{st}$ des Stromstellgliedes 7 und somit der Eingangsstrom $I_g$ eingeregelt wird, derart, daß die Leistungsaufnahme $U_{gl} \cdot I_g$ des Teilnehmers konstant bleibt und durch die Änderung der Eingangsspannung $U_{gl} \cdot$ nicht beeinflußbar ist.

Das Tiefpaßfilter 12 verhindert, daß Spannungsschwankungen im Signalfrequenzbereich nachgeregelt werden. In diesem Frequenzbereich ist die Charakteristik des Strom-Regelkreises (Sicherstellung der Eingangsimpedanz) wirksam.

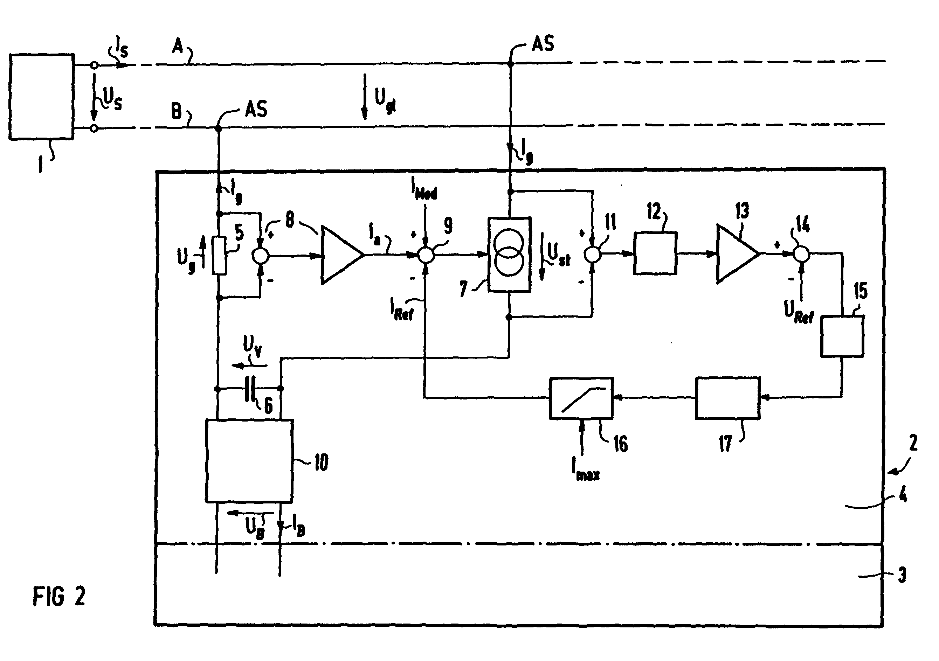

Figur 2 zeigt einen weiteren an einen Feldbus angeschlossenen Busteilnehmer, dessen Anschaltung Mittel für eine Strombegrenzung und für einen sogenannten Soft-Start umfaßt. Die in den Figuren 1 und 2 vorkommenden gleichen Teile sind mit gleichen Bezugszeichen versehen. Eine Strombegrenzungsschaltung 16 bewirkt, daß die Busanschaltung 4 einen zu hohen Strom, z. B. durch einen Kurzschluß hinter dem Stromstellglied 7, aus den Busleitungen A, B zieht. Dadurch ist eine sichere Versorgung der übrigen Teilnehmer und eine störungsfreie Kommunikation der Busteilnehmer gewährleistet. Eine Soft-Starteinrichtung 17 sorgt dafür, daß beim Anlegen der Speisespannung $U_S$ an den Bus oder beim Anschalten eines Teilnehmers die Stromaufnahme nur langsam steigt, um das System in einen stabilen Zustand zu führen bzw. die Kommunikation der Busteilnehmer nicht zu stören.

### Patentansprüche

1. Busteilnehmer (2), welcher an einen als Übertragungsmedium zwei Leitungen (A, B) nutzenden Feldbus anschließbar ist, über welchen Informationen als Wechselspannung übertragen werden und dem eine Speisegleichspannung ($U_S$) zuführbar ist, mit einer Busanschaltung (4), welcher diese um die auf den Busleitungen abfallende Spannung reduzierte Gleichspannung ($U_{gl}$) als Eingangsspannung zuführbar ist, aus der die Anschaltung (4) eine für den Betrieb der Elektronik (3) des Teilnehmers erforderliche Versorgungsspannung ($U_B$) erzeugt, **dadurch gekennzeichnet,** daß die Anschaltung (4) zur Einstellung der Leistungsaufnahme auf einen konstanten Wert unabhängig von der der Busanschaltung (4) zugeführten Eingangsgleichspannung einen ersten und einen zweiten Regelkreis aufweist, welche in Wirkverbindung stehen und von denen der erste Regelkreis den Eingangsgleichstrom ($I_g$) bei einer konstanten Eingangsspannung ($U_{gl}$) mittels eines Referenzstromes ($I_{Ref}$) auf einem konstanten Wert hält und der zweite Regelkreis aufgrund einer voreinstellbaren Referenzspannung ($U_{Ref}$) bei einer Änderung der Eingangsgleichspannung ($U_{gl}$) auf den Referenzstrom ($I_{Ref}$) einwirkt, wobei die Anschaltung (4) dem bei der Informationsübertragung anliegenden Wechselspannungssignal keine Energie entnimmt.

2. Busteilnehmer (2) nach Anspruch 1, **dadurch gekennzeichnet,** daß der zweite Regelkreis die Ausgangsspannung ($U_{st}$) eines Stromstellgliedes (7) auf die Referenzspannung ($U_{Ref}$) einregelt, wobei die Regeldifferenz auf den Referenzstrom ($I_{Ref}$) einwirkt, welche den Eingangsstrom ($I_g$) einregelt, wobei diese Regeldifferenz auf den Eingang des Stromstellgliedes (7) wirkt.

3. Busteilnehmer (2) nach Anspruch 2, **dadurch gekennzeichnet,** daß das Stromstellglied (7) ein Transistor ist.

### Claims

1. Node (2) which can be connected to a field bus using two lines (A, B) as transmission medium, by way of which node information is transmitted as alternating voltage and to which a supply direct voltage ($U_S$) can be supplied, having a bus interface (4), to which this direct voltage ($U_{gl}$), reduced by the voltage falling on the bus lines, can be supplied as input voltage, from which the interface (4) generates a supply voltage ($U_B$) necessary for the operation of the electronics (3) of the node, characterized in that the interface (4), for adjusting the power consumption to a constant value independently of the input direct voltage supplied to the bus interface (4), has a first and a second regulating circuit which are in operative connection, the first regulating circuit keeping the input direct current ($I_g$) with a constant input voltage ($U_{gl}$) at a constant value by means of a reference current ($I_{Ref}$), and the second regulating circuit, because of a presettable reference voltage ($U_{Ref}$), with a change of the input direct voltage ($U_{gl}$) acting on the reference current ($I_{Ref}$), with the interface (4) not taking any power from the alternating voltage signal applied during the information transmission.

2. Node (2) according to claim 1, characterized in that the second regulating circuit adjusts the output voltage ($U_{st}$) of a current actuator (7) to the reference voltage ($U_{Ref}$), with the system deviation acting on the reference current ($I_{Ref}$), which adjusts the input current ($I_g$), with this system deviation acting on the input of the current actuator (7).

3. Node (2) according to claim 2, characterized in that the current actuator (7) is a transistor.

### Revendications

1. Station (2) pouvant être raccordée à un bus de terrain, qui utilise comme support de transmission deux lignes (A, B), par l'intermédiaire duquel des informations sont transmises sous forme de tension alternative et auquel une tension continue d'alimentation ($U_S$) peut être envoyée, comportant une connexion de bus (4) à laquelle peut être envoyée comme tension d'entrée cette tension continue ($U_{gl}$) qui est réduite de la tension chutant sur les lignes de bus et à partir de laquelle la connexion (4) produit une tension d'alimentation ($U_B$) nécessaire au fonctionnement de l'électronique (3) de la station raccordée au bus, caractérisée par le fait que la connexion (4) comporte, pour le réglage de la consommation de puissance à une valeur constante indépendamment de la tension continue d'entrée envoyée à la connexion de bus (4), un premier et un deuxième circuits de régulation, qui sont en liaison active et dont le premier circuit de régulation, pour une tension d'entrée ($U_{gl}$) constante, maintient à une valeur constante le courant continu d'entrée ($I_g$) au moyen d'un courant de référence ($I_{Ref}$) et dont le deuxième circuit de régulation, lors d'une variation de la tension continue d'entrée ($U_{gl}$), agit sur le courant de référence ($I_{Ref}$) en fonction d'une tension de référence ($U_{Ref}$) pouvant être réglée au préalable, la connexion (4) ne prélevant pas d'énergie au signal de tension alternative appliqué lors de la transmission d'informations.

2. Station (2) selon la revendication 1, caractérisée par le fait que le deuxième circuit de régulation règle la tension de sortie ($U_{st}$) d'un élément de réglage de courant (7) à la tension de référence ($U_{Ref}$), la différence de régulation qui règle le courant d'entrée ($I_g$) agissant sur le courant de référence ($I_{Ref}$) et cette différence de régulation agissant en fait sur l'entrée de l'élément de réglage de courant (7).

3. Station (2) selon la revendication 2, caractérisée par le fait que l'élément de réglage de courant (7) est un transistor.

FIG 1

EP 0 774 185 B1

FIG 2

EP 0 774 185 B1